# DEMANDE DE BREVET EUROPEEN

(11) **EP 1 013 977 A1**
(43) Date de publication de la demande: **28.06.2000**
(21) Numéro de dépôt: 99470024.3
(22) Date de dépôt: 09.12.1999
(51) Int. Cl.: F16L 3/18, F16L 9/22

(54) **Système de conduit de transport d'effluents gazeux, notamment de fumées, et cheminée comportant un tel conduit**

(30) Priorité: 24.12.1998 FR 9816515
(71) Demandeur: Canam, 54800 Jarny (FR)
(72) Inventeur: Serignac, Patrick, 57000 Metz (FR)
(74) Mandataire: Ballot, Paul Denis Jacques

(57) **Abrégé**

Le conduit (2) est formé par la juxtaposition d'éléments de conduits, ou viroles, formés chacun par un assemblage de pièces (10, 11, 20, 21) de faible épaisseur en matériau composite, liées entre elles de manière étanche par leurs chants longitudinaux (50). Les pièces constitutives d'un élément de conduit comportent sur leurs faces extérieures des nervures de raidissement (30, 31) avec des rainures (40) longitudinales dans lesquelles sont placés des plots de maintien (70, 71) fixés sur des barres de liaison (61) transversales, les plots de maintien d'une même barre de liaison s'engageant respectivement dans des rainures différentes d'un même élément de conduit. Les éléments de conduits sont supportés avec possibilité de coulissement longitudinal dans une structure porteuse (4).

Application notamment aux cheminées de type industriel.

## Description

La présente invention concerne de manière générale un système de conduit de transport d'effluents gazeux, notamment de fumées, particulièrement destiné au transport de tels gaz ou fumées ayant des propriétés chimiquement corrosives. Une application principale, mais non exclusive, est la réalisation de cheminées de type industriel. L'invention a vocation à s'appliquer à toute installation de taille industrielle où se pose le problème du transport et en particulier de l'évacuation d'effluents gazeux, par exemple dans le domaine des chaufferies centralisées d'habitation, des chaufferies industrielles, des fours, et diverses usines notamment celles d'incinération d'ordures ménagères ou de déchets industriels.

Ainsi, l'invention vise aussi à s'appliquer à tous conduits de transport ou d'évacuation de fumées ou gaz, ou chambres de passage de ces gaz, susceptibles d'être soumis à une corrosion par contact avec des constituants corrosifs des dits gaz ou fumées. Elle s'applique particulièrement dans toutes les zones où le risque d'apparition d'un point de rosée est prépondérant.

En effet, pour répondre aux exigences croissantes en matière d'environnement, l'installation de dispositifs de dépollution des effluents gazeux s'est généralisée dans l'industrie. Les gaz produits sont soumis à différents traitements, tels que dépoussiérage, lavage, etc., qui ont pour but d'abaisser le taux de composés nocifs présents dans les rejets gazeux. Une fois traités, les gaz suivent les conduits d'évacuation et en particulier le conduit de cheminée jusqu'à leur expulsion en altitude.

Un des effets directement induits par ces traitements est l'abaissement de la températures des fumées et, en conséquence, une augmentation de la condensation sur les parois, ou au moins sur certaines zones de celles-ci. Par exemple, certains procédés de traitement des fumées, par voie humide, refroidissent les fumées et les font circuler dans un laveur, dont elles ressortent relativement froides, à des températures de l'ordre de 40 à 110°C, et saturées d'humidité. Ces fumées condensent alors fortement dans le circuit d'évacuation, et notamment dans le conduit de cheminée en bout de parcours.

Il en résulte finalement une amplification des phénomènes de corrosion des parois internes des conduits par les composés tels que HCl, HF, SOₓ ou H₂SO₄.

Les conduits métalliques, même en métaux dits inoxydables, résistent mal à ces condensats acides. Pour pallier ce problème, de nombreux développements ont déjà été menés en vue d'accroître la résistance des conduits à ces attaques, et donc leur durée de vie, en particulier en cherchant à améliorer la protection des surfaces internes des conduits.

Ainsi, une technique connue, appelée ébonitage, consiste à appliquer manuellement un revêtement caoutchouté sur la paroi intérieure d'un conduit métallique, et à le cuire pour obtenir une couche de protection vitrifiée. La mise en oeuvre de cette technique est relativement complexe, et le produit obtenu assez fragile et difficile à réparer.

D'autres techniques du même type sont également connues, basées sur l'idée de revêtir la surface intérieure des conduits par une couche de protection en un matériau résistant aux attaques chimiques des fumées et condensats, par exemple en matériau synthétique, résine synthétique, élastomère, composite, ou céramique. On notera à ce sujet que des matériaux de type plastique ou résine synthétique peuvent convenir du fait que, comme indiqué ci-dessus, les températures sont relativement basses. Ainsi, par exemple, un matériau composite résine-fibre pourra résister à des températures de 150°C, soit bien au-delà des températures prévues des fumées.

La couche de protection peut être appliquée comme un revêtement, c'est à dire appliquée directement à l'état liquide ou pâteux sur la surface interne du conduit et séchée ou solidifiée ensuite, comme dans le cas de l'ébonitage mentionné ci-dessus. Il est également connu de réaliser une telle couche de protection sous forme de plaques ou panneaux rapportés introduits dans le conduit et maintenus par divers moyens. Par exemple, le document EP 344151 décrit un procédé selon lequel les panneaux sont introduits dans le conduit en étant cintrés élastiquement, et, selon ce document, le maintien ultérieur des panneaux résulte de leur élasticité intrinsèque qui fait que le panneau s'applique sur le conduit une fois l'effort de cintrage relâché.

Une autre technique enfin consiste à réaliser un tubage du conduit en y introduisant des éléments de conduits tubulaires, réalisés classiquement en stratifié de vinyl-ester, par exemple par enroulement filamentaire, ou même à réaliser directement le conduit par cette technique d'enroulement filamentaire. Les conduits ainsi réalisés peuvent par exemple avoir une épaisseur de paroi de 10 à 15 mm, pour des diamètres allant de quelques centaines de millimètres à 2 m ou plus, par exemple pour des cheminées dont le diamètre va jusqu'à 5m et la hauteur de 8 à 80 m.

Les conduits réalisés selon cette technique présentent des avantages certains sur le plan de la résistance à la corrosion, et peuvent également présenter une très bonne résistance mécanique, moyennant éventuellement d'augmenter la proportion de fibres de verres, ou de soutenir le conduit par une structure métallique annexe adéquate. Mais cela en augmente considérablement le coût. De plus, la variété des diamètres requis conduit au besoin de disposer, pour la fabrication, d'un grand nombre de mandrins d'enroulement, ou même à réaliser spécifiquement ces mandrins pour fabriquer les éléments de conduits adaptés à chaque cas particulier, ceci étant particulièrement le cas pour des opérations de rénovation ou réparations de cheminées existantes. Ceci conduit bien évidemment à un coût important, résultant de la réalisation de pièces non standard, en petites séries sinon même à l'unité. Un inconvénient supplémentaire réside dans le fait que l'enroulement des fils lors de la fabrication, surtout sur des pièces de grandes dimensions, est propice à emprisonner de microbulles d'air, qui peuvent constituer ultérieurement des sites d'amorçage de défauts.

La présente invention a généralement pour but de résoudre les problèmes exposés ci-dessus et vise en particulier à fournir un système de réalisation ou rénovation de conduits d'effluents gazeux résistant à la corrosion, modulable pour permettre une industrialisation facile tant au moment de la fabrication des éléments de conduits que lors de leur mise en oeuvre sur chantier, et présentant en conséquence des coûts de revient réduits.

Avec ces objectifs en vue, l'invention a pour objet un système de conduit de transport d'effluents gazeux, caractérisé en ce qu'il comporte une structure porteuse destinée à supporter le conduit et s'étendant selon une direction longitudinale, et le conduit est formé par la juxtaposition, selon la dite direction longitudinale, d'éléments de conduits, chaque élément de conduit étant lui même formé par un assemblage de pièces constitutives de faible épaisseur en matériau composite, liées entre elles de manière étanche par leurs chants longitudinaux, les pièces constitutives d'un élément de conduit ayant toutes la même dimension dans la dite direction longitudinale et comportant par ailleurs, sur leurs faces extérieures, des nervures de raidissement dans lesquelles sont ménagées des rainures qui s'étendent dans la direction longitudinale et dans lesquelles sont placés des plots de maintien fixés sur des barres de liaison s'étendant sensiblement perpendiculairement à la direction longitudinale, les plots de maintien d'une même barre de liaison s'engageant respectivement dans des rainures différentes d'un même élément de conduit.

L'invention repose en fait sur l'idée de réaliser des conduits de transport de fumées ou similaires de manière modulaire, par assemblage de pièces standardisées, préfabriquées et stockées, et pouvant être facilement manipulées et assemblées au moment de la fabrication du conduit, ou de la rénovation d'une cheminée existante. Il est à noter que les pièces sont réalisées en matériau composite, par exemple en SVR (stratifié verre résine) et sont préférentiellement fabriquées par moulage par pultrusion. Ce procédé de fabrication est particulièrement adapté pour fabriquer de telles pièces en grandes longueurs, de section constante, et permet de plus de réaliser la structure souhaitée de ces pièces en répartissant dans la section les fibres de verre de la manière la plus adéquate, en particulier par exemple en augmentant la concentration de résine du côté de la face interne, qui est au contact des fumées, pour renforcer la résistance du conduit aux agents chimiques. Il est en effet important d'avoir du côté de la face interne, une forte teneur en résine, par exemple d'environ 90 %, pour éviter que la fibre de verre génère des faiblesses de l'étanchéité par migration des agents chimiques à travers l'épaisseur du conduit.

L'épaisseur du voile des pièces, c'est à dire en dehors des zones où se trouvent les raidisseurs, est toutefois relativement faible, de l'ordre de quelques millimètres, 3 à 5 mm par exemple. Cette faible épaisseur est suffisante pour assurer l'étanchéité requise, et permet de plus, du fait de la nature du matériau utilisé, de réaliser des pièces et donc un conduit ayant un faible poids.

Une des idées à la base de l'invention, est en effet de dissocier les fonctions devant être généralement assurées par tout conduit de fumée, à savoir d'une part l'étanchéité et la résistance chimique, et d'autre part la résistance mécanique. L'invention exploite cette idée en réalisant d'une part une structure porteuse sous forme d'une charpente métallique conçue de manière à résister aux contraintes mécaniques telles que, dans le cas pris comme exemple d'une cheminée industrielle de grande hauteur, l'effet du vent et le poids propre de la cheminée, et d'autre part le conduit lui même qui doit être étanche et le rester aussi longtemps que possible malgré les attaques chimiques des fumées, mais qui n'a pas besoin de présenter par ailleurs une grande résistance mécanique dès lors qu'il est soutenu par la structure porteuse.

Toujours en restant dans le cas d'une cheminée, ayant donc un conduit vertical, et considérant donc que ce conduit n'a pas besoin de présenter une résistance particulière à la flexion, puisque c'est la structure porteuse qui joue ce rôle, Les éléments du conduit n'ont donc pratiquement qu'à supporter les contraintes de compression dues au poids propre du conduit et s'exerçant dans la direction longitudinale, ces contraintes restant d'ailleurs relativement faibles du fait du faible poids des pièces utilisées. Il est cependant nécessaire d'empêcher tout flambement des éléments du conduit et des pièces constitutives. Ceci est assuré par les raidisseurs longitudinaux qui servent également à constituer les glissières dans lesquels s'engagent les plots utilisés pour la fixation des pièces sur les barres de liaison. Les barres de liaison d'une part participent au maintien assemblé des pièces constitutives d'un même élément du conduit, en plus de la liaison étanche assurée directement par la coopération des chants longitudinaux de ces pièces, et d'autre part assurent la liaison avec la structure porteuse.

Un petit nombre de pièces différentes suffira pour réaliser des conduits de sections très diverses. Préférentiellement, on n'utilisera que deux types de pièces : des pièces d'angles, à 90° avec un arrondi de l'angle suffisant, et des pièces planes, qui ont toutes la même dimension longitudinale, qui peut être de l'ordre de plusieurs mètres, par exemple 3 mètres. Les pièces planes peuvent être fabriquées en plusieurs largeurs, de manière à éviter de devoir assembler trop de pièces pour des conduits de grande section, mais classiquement on pourra se contenter de deux ou trois largeurs, par exemple 300, 500, et 700 mm. Avec ces deux types de pièces, pièces planes et pièces d'angle, on peut réaliser des conduits tubulaires ayant une section de forme généralement rectangulaire, mais avec des angles arrondis, avec un rayon de courbure de 200 à 300 mm par exemple, comme on le verra par la suite. Eventuellement, on pourrait aussi utiliser des pièces ayant une autre section, par exemple des pièces d'angles à 135°, ou même des pièces ayant complètement en section transversale une forme cintrée en arc de cercle. On pourra ainsi réaliser une gamme de pièces ayant toutes la même dimension longitudinale, et des formes ou dimensions transversales différentes, et combiner les différentes pièces pour réaliser une virole constituant un élément de conduit de section appropriée aux besoins, non seulement en dimensions mais aussi en forme de la section. Pour des raisons évidentes de standardisation et de réduction des coûts de fabrication, le nombre de pièces différentes sera toutefois le plus limité possible.

Il est précisé dès maintenant que le terme "conduit" utilisé ci-dessus ne doit pas être compris comme limitant le domaine de l'invention à la réalisation de conduits de forme tubulaire, comme par exemple dans les cheminées, mais doit au contraire se comprendre comme englobant tous autres conduits tels que carneaux, ou toutes parois, tubulaires ou non, d'éléments constitutifs d'un circuit ou peuvent circuler des gaz ou fumées, telles que en particulier les parois d'éventuelles chambres de traitement ou de lavage de ces gaz ou fumées.

Selon une disposition préférentielle de l'invention, un seul des plots de maintien d'une même barre est lié rigidement à la pièce dans la rainure de laquelle il est placé et constitue un point fixe, les autres plots s'engageant dans leurs rainures respectives avec une possibilité de coulissement longitudinal et de jeu transversal. Cette disposition permet d'absorber les inévitables dilatations différentielles survenant dans la direction transversale entre les pièces du conduit et les barres de liaison, comme cela sera mieux expliqué par la suite.

Selon une autre disposition particulière, réservée au cas où les conduits sont effectivement tubulaires, tels que en particulier pour les conduits de cheminée, les barres de liaison forment les côtés de cadres métalliques qui entourent le dit conduit. Ces cadres sont préférentiellement montés guidés et librement coulissants dans la structure porteuse, constituée par exemple sous forme d'une charpente métallique formée de profilés ou cornières assemblés de manière à constituer des guides pour les dits cadres. La possibilité de coulissement longitudinal des cadres par rapport à la structure porteuse permet d'absorber tout effet de dilatation différentielle, dans la dite direction longitudinale, entre le conduit et la dite structure porteuse.

Pour éviter que les barres de liaison ou les cadres ne viennent malencontreusement s'arc-bouter entre les profilés de guidage de la charpente, par exemple suite à un début de pivotement de la barre autour du point fixe, les barres de liaison des cadres portent préférentiellement une patte qui s'étend dans la direction longitudinale et qui porte un plot de maintien supplémentaire introduit dans la même rainure que le plot de point fixe. Cette disposition garantit que les barres de liaison restent bien perpendiculaires aux rainures, et donc à la direction longitudinale du conduit.

Le conduit comporte par ailleurs des moyens de liaison étanche des éléments de conduits adjacents entre eux, ces moyens de liaison pouvant par exemple soit comporter des profilés de jonction qui s'emboîtent, de manière étanche, avec les bords des pièces constitutives, soit comporter un joint en matériau élastomère.

L'invention a aussi pour objet une pièce de base constitutive d'un conduit de transport d'effluents gazeux, cette pièce étant caractérisée en ce qu'elle est réalisée en matériau composite et a une forme de plaque rectangulaire allongée selon une direction longitudinale, plane ou pliée selon la dite direction longitudinale pour former un arrondi, et comporte sur une face extérieure au moins un renfort raidisseur s'étendant dans la dite direction longitudinale et dans lequel est réalisé une rainure de forme générale en T, les bords longitudinaux de la pièce étant conformés pour pouvoir coopérer, entre deux telles pièces juxtaposées, en assurant une liaison étanche entre les dites pièces.

Préférentiellement, la pièce constitutive est réalisée par pultrusion, en résine synthétique composite, par exemple en SVR (stratifié verre résine).

D'autres caractéristiques et avantages apparaîtront dans la description qui va être faite d'une cheminée et d'un conduit de cheminée réalisé conformément à l'invention.

On se reportera aux dessins annexés dans lesquels :
- la figure 1 est une représentation schématique en coupe longitudinale d'une cheminée susceptible de comporter plusieurs conduits ;
- la figure 2 est une vue en coupe transversale de la cheminée montrant une disposition possibles des différents conduits dans la cheminée ;
- la figure 3 est une vue en coupe horizontale du conduit réalisé conformément à l'invention ;
- la figure 4 est une vue partielle de l'extérieur du conduit, vu selon la direction de la flèche F4 de la figure 3 ;
- la figure 5 est une vue en coupe selon la ligne V-V de la figure 4 ;
- les figures 6a à 6d illustrent diverses variantes de la jonction entre deux viroles du conduit de cheminée, représentées en coupe selon un plan longitudinal;
- la figure 7 est une vue de détail d'une zone d'angle du conduit, en coupe selon la ligne VII-VII de la figure 6a,
- les figures 8 à 10 illustrent diverses variantes de liaison des chants longitudinaux des pièces constitutives d'une virole ;
- les figures 11 à 16 illustrent diverses variantes de mise en oeuvre du système selon l'invention, dans des conduits de formes et dimensions différentes.

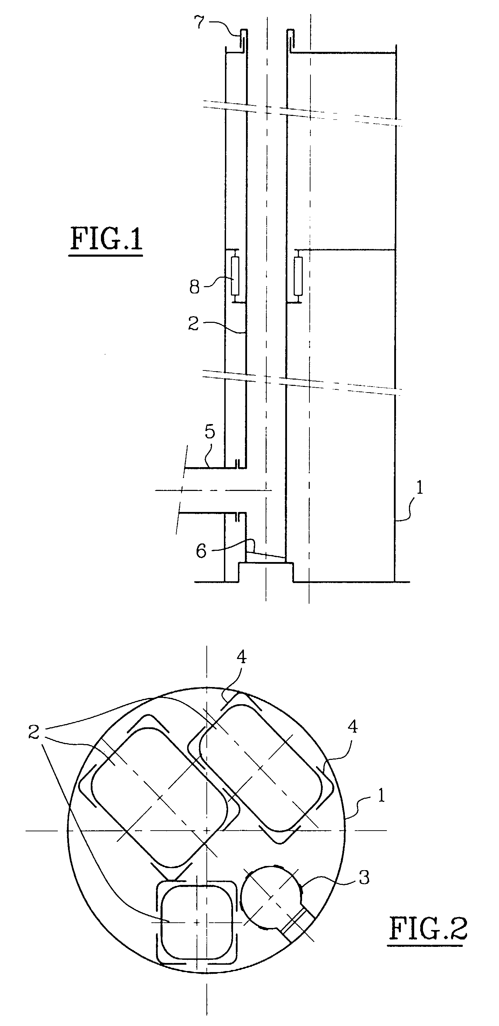

La cheminée représentée figures 1 et 2 à titre d'exemple comporte un fût extérieur 1, réalisé par exemple en tôle, à l'intérieur duquel sont disposés trois conduits de fumées 2 et une échelle de visite à crinoline 3. Le nombre, la forme et la disposition de ces conduits ne sont bien sûr nullement limitatifs de l'invention. On a également représenté sur la figure 2, de manière simplifiée, la structure porteuse 4 de chaque conduit, qui comporte par exemple une cornière métallique à chaque angle du conduit. Pratiquement, ces cornières pourront être reliées par d'autres éléments de construction pour former, de manière connue en soi, une charpente métallique apte à assurer une résistance mécanique suffisante de la cheminée et éventuellement à maintenir des éléments de calorifugeage pour l'isolation thermique des conduits, si nécessaire.

Sur le dessin de la figure 1 on n'a représenté qu'un seul des conduits de fumées, auquel se raccorde, vers son extrémité inférieure, une conduite 5 provenant de l'installation génératrice de fumées. Préférentiellement, la paroi d'extrémité inférieure 6 du conduit est oblique, pour faciliter la collecte et la récupération de condensats qui s'écoulent le long des parois internes du conduit. L'extrémité supérieure du conduit se raccorde à une plaque de fermeture de la cheminée par des moyens de liaison 7 assurant une certaine étanchéité et autorisant un déplacement vertical relatif de l'extrémité supérieure du conduit par rapport à la cheminée, pour tenir compte des dilatations différentielles.

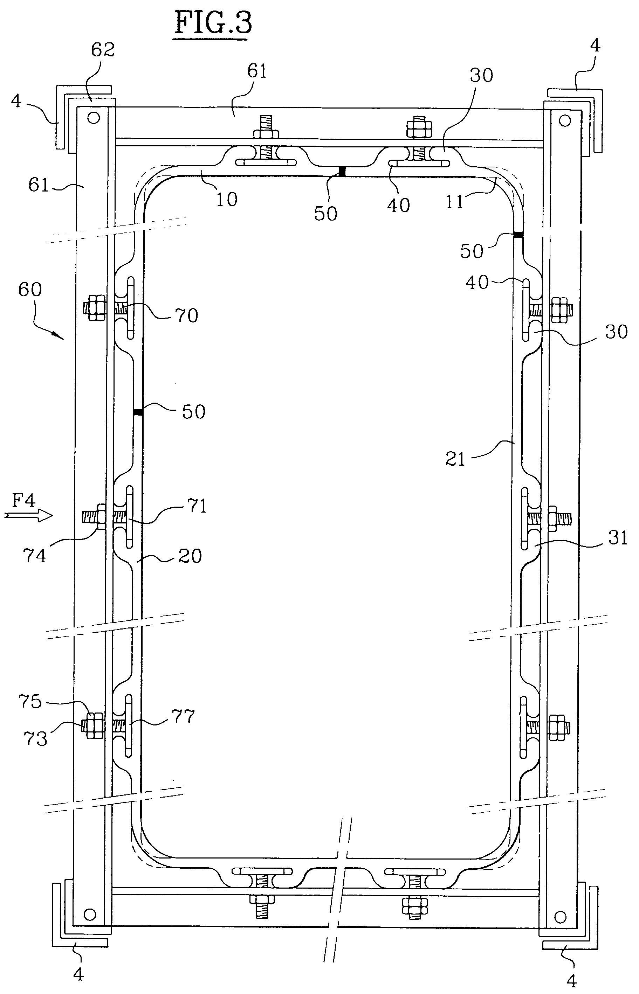

La virole 10 représentée figure 3 a une forme rectangulaire et est composée de plusieurs pièces en matériaux composites, toutes de même hauteur, par exemple de 3 mètres : des pièces d'angle 10, 11, et des pièces dites planes 20, 21 formant les côtés du rectangle. Chacune de ces pièces comporte au moins un jeu de nervures de raidissement 30, chaque jeu de nervure étant formé par deux lèvres s'étendant l'une vers l'autre à partir de la face extérieure des pièces et définissants entre elles une rainure en forme de T 40.

Les différentes pièces d'une même virole sont reliées entre-elles de manière étanche par leurs chants longitudinaux par des moyens d'assemblage représentés par le repère 50 et qui seront détaillés par la suite.

Afin d'illustrer différentes possibilités de réalisation des pièces constitutives de la virole, on a représenté sur la figure 3 une pièce d'angle 10 ayant un jeu de nervures de chaque côté de l'angle (angle situé en haut à gauche de la figure 3), et une autre pièce d'angle 11 ayant un jeu de nervures sur un seul côté de l'angle, l'autre côté de l'angle étant relié directement sur la pièce plane adjacente (angle situé en haut à droite sur la figure 3). Les pièces d'angles 10 et 11 pourraient aussi être identiques. De même, les pièces planes pourront comporter deux jeux de nervures ou plus, en fonction de la largeur de ces pièces. On pourra par exemple réaliser deux jeux de nervures sur des pièces de 300 mm de large, et trois jeux de nervures sur des pièces de 700 mm de large.

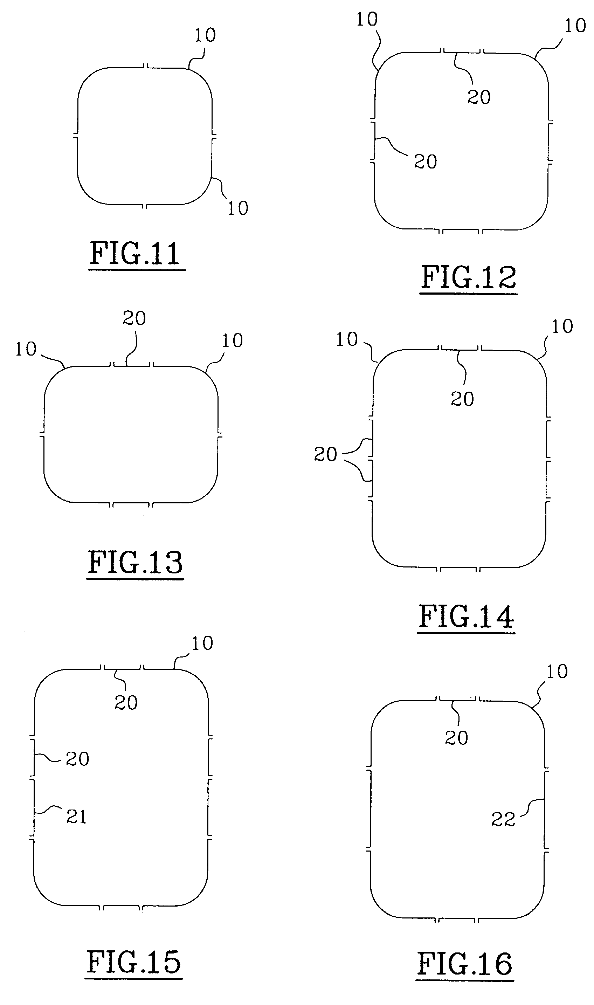

On pourra se reporter dès maintenant aux figures 11 à 16 illustrant, à titre d'exemples nullement limitatifs, diverses configurations possibles des viroles.

La figure 11 illustre une virole formée de quatre pièces d'angles 10. On notera que dans une configuration encore plus réduite, on pourrait utiliser quatre pièces d'angle du type des pièces 11.

La figure 12 illustre une virole de section carrée formée de quatre pièces d'angle 10 et quatre pièces planes 20 de faible largeur, par exemple 300 mm.

La figure 13 illustre une virole de section rectangulaire formée de quatre pièces d'angle 10 et deux pièces planes 20 de faible largeur pour les grands côtés du rectangle.

La figure 14 illustre une virole de section plus importante, également rectangulaire, formée de quatre pièces d'angle 10, deux pièces planes 20 pour les petits côtés, et quatre pièces planes 20 pour les grand côtés du rectangle.

La figure 15 illustre une autre forme de virole rectangulaire plus allongée, dont chaque grand côté est formé par une pièce plane 20 de faible largeur, par exemple 300 mm et par une autre pièce plane 21 de largeur moyenne, par exemple 500 mm.

La figure 16 illustre encore une autre forme de virole rectangulaire, dont les petits côtés sont formés par des pièces 20 de faible largeur, et chaque grand côté est formé par une pièce plane 22 de grande largeur, par exemple 700 mm.

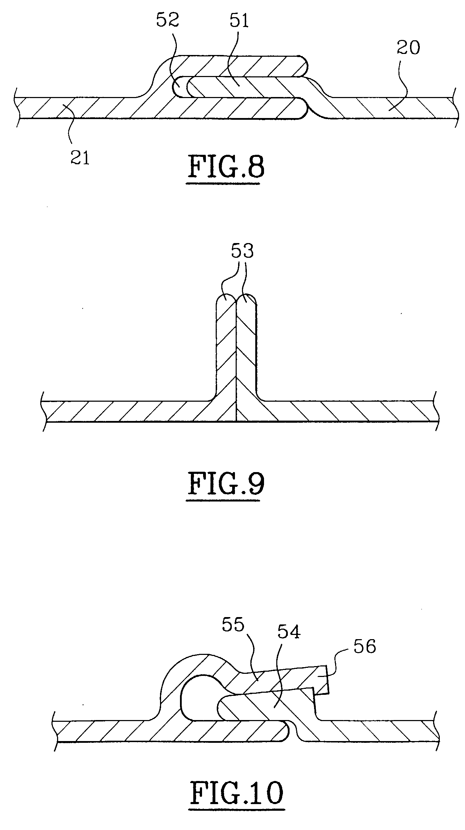

Différentes formes de réalisation de l'assemblage des pièces par leurs chants longitudinaux sont représentées aux figures 8 à 10. La figure 8 représente un assemblage par emboîtement et collage d'une languette 51 formée sur un côté de chaque pièce, dans une rainure 52 formée sur l'autre côté de la pièce adjacente.

La figure 9 représente un assemblage par contact de retours 53 aménagés sur chaque côté de chaque pièce. Les retours 53 de deux pièces adjacentes peuvent être solidarisés par pincement, collage, ou autres moyens adaptés pour assurer l'étanchéité.

La figure 10 montre un assemblage du type à languette et rainure, mais dans ce cas la languette 54 et la lèvre 55 de la rainure, du côté extérieur du conduit, sont conformés de manière que la languette s'engage dans la rainure en déformant élastiquement la lèvre 55 dont le bord est conformé en crochet 56 pour retenir la languette après insertion. Un tel assemblage peut en particulier permettre de se dispenser de collage, une étanchéité suffisante pouvant être assurée par l'emboîtement conique de la languette dans la rainure.

Ces trois modes d'assemblage ne sont nullement limitatifs. On notera cependant que, quel que soit le mode d'assemblage utilisé, on évitera au maximum de créer ou laisser subsister au niveau des joints, du côté intérieur du conduit, des aspérités susceptibles de retenir les condensats et favoriser leur infiltration au travers de la paroi du conduit.

Chaque élément du conduit est donc constitué d'une virole, formée comme indiqué ci-dessus par l'assemblage de pièces préfabriquées. Chaque élément comporte par ailleurs un ou généralement plusieurs cadres 60, répartis sur la hauteur de la virole, qui entourent la dite virole, contribuent à sa rigidité et servent également à son maintien, guidé en coulissement entre les cornières 4 de la charpente.

Chaque cadre est formé d'un assemblage de barres de liaisons telles que des cornières 61 ou autres profilés métalliques. Les angles du cadre 60 sont conformés de manière à pouvoir coulisser dans l'angle intérieur des cornières de charpente 4. Comme on le voit figure 3, on pourra par exemple à cet effet fixer aux coins du cadre 60 des éléments de cornières 62 formant des coulisseaux mobiles dans les cornières de charpente 4.

Sur chaque barre de liaison 61 sont fixés des plots 70, 71 ayant une tête 72 conformée, par exemple sous forme d'une plaquette rectangulaire, pour s'engager avec une possibilité de coulissement longitudinal dans les rainures en T 40 des pièces du conduit. Les plots 70 ont par ailleurs une tige filetée 73 permettant leur fixation sur la barre de liaison au moyens d'écrous 74, 75. Les dimensions des plots sont par ailleurs telles qu'elles assurent un jeu , par exemple de l'ordre de quelques millimètres, entre les plots et les nervures 30, 31 ou rainures 40, suffisant pour autoriser un déplacement relatif dans la direction des barres de liaison, lors des dilatations du conduit, et éviter ainsi de créer des contraintes de traction ou de compression dans le plan des pièces constitutives en matériau composite.

Ainsi, sur chaque barre de liaison, un seul plot assure la liaison rigide de la barre de liaison avec la virole, par exemple le plot repéré 71 sur la figure 3 dont l'écrou 74 est serré de manière à serrer fortement les lèvres de la rainure contre la barre de liaison. Par contre les autres plots de la même barre de liaison sont fixés par des écrous et contre-écrous 75 qui laissent subsister un jeu minimum apte à permettre le déplacement relatif mentionné ci dessus.

Les dispositions qui viennent d'être décrites permettent donc d'assurer la tolérance du système aux problèmes de dilatation différentielle entre la virole et chaque barre de liaison prise individuellement. Dans la mesure où les dimensions du cadre 60 sont également fixes, il pourrait cependant subsister un problème dû au fait que la largeur d'une face quelconque de la virole est susceptible de varier par dilatation thermique, alors que la distance entre les deux faces en vis-à-vis adjacentes à celle prémentionnée reste fixe car déterminée par les dimensions du cadre. On pourrait remédier à ce problème en donnant au cadre une certaine latitude de déformation, par exemple en autorisant un déplacement relatif des barres de liaison au niveau de leur assemblage dans les angles du cadre. Cette possibilité, entraînant des variations des dimensions du cadre serait toutefois limitée par la nécessité d'éviter un coincement, ou à l'inverse trop de jeu, entre les angles du cadre et les cornières 4 de la charpente.

Toutefois, ce problème est avantageusement résolu, en utilisant des cadres rigides et de dimensions fixes, grâce à l'utilisation selon l'invention, de pièces d'angles composites de faible épaisseur et ayant un rayon de courbure suffisant pour avoir la possibilité de se déformer en flexion dans les zones d'angles, comme indiqué par les tracés en pointillés de la figure 3, lors des dilatations différentielles entre cadre et virole, sans que cela génère pour autant de fortes contraintes internes dans les pièces d'angle.

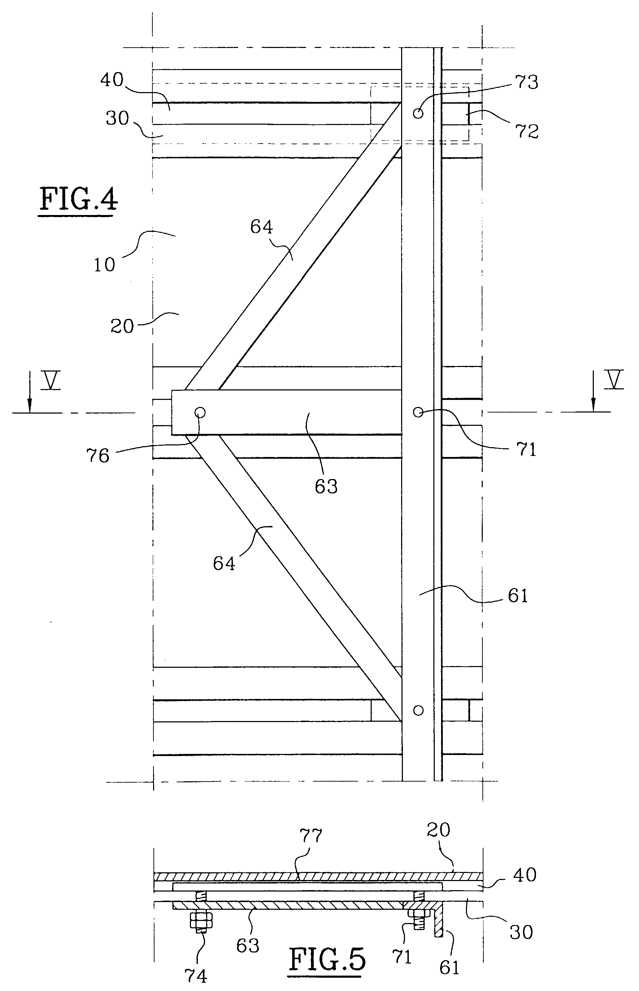

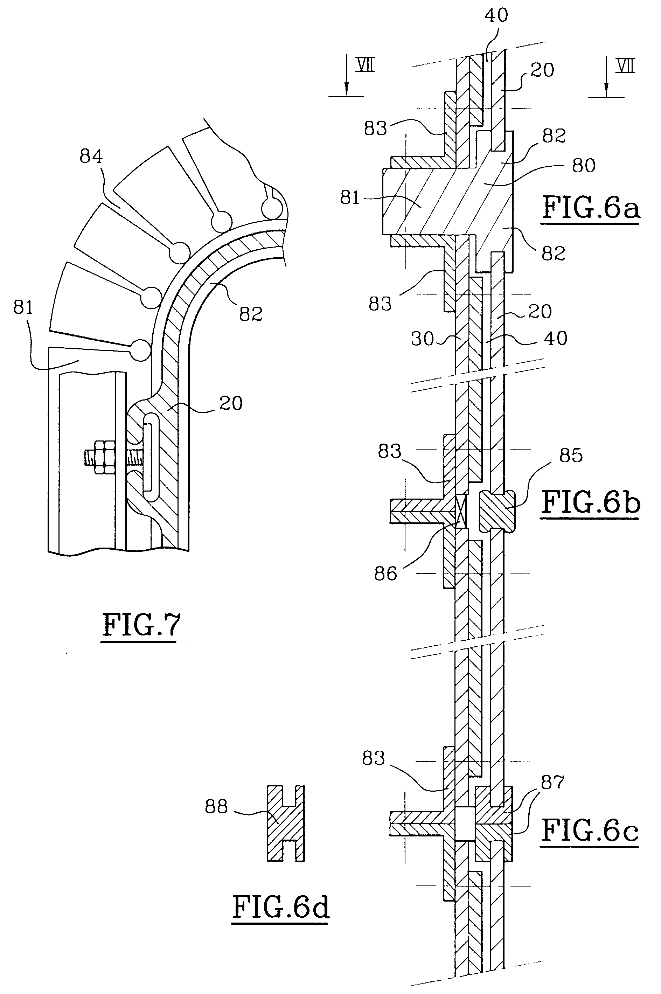

On notera ici, au vu de ce qui précède, que la possibilité de déplacement des plots dans les rainures dans la direction longitudinale n'a que relativement peu d'importance par rapport à la possibilité de déplacement dans la direction transversale. En effet, si l'on admet que les déformations de dilatation de la virole sont à peu près uniformes, les plots vont rester au même niveau, dans la direction longitudinale, dans les rainures, ce niveau étant déterminé par le plot 71 qui, étant serré, constitue un point fixe entre chaque face de la virole et la barre de liaison respective. Toutefois on ne peut exclure la survenance de déformations parasites de la virole ou même du cadre, susceptible de créer un arc-boutement d'une barre de liaison par rapport à la virole. Pour éviter tout risque de blocage qui en résulterait, les barres de liaison comportent, comme représenté figures 4 et 5, une patte 63, qui est perpendiculaire à la barre 61 et solidaire de cette dernière au niveau du plot 71 de point fixe, et qui porte à son extrémité un plot complémentaire 76 engagé dans la même rainure que le dit plot de point fixe 71 mais avec une possibilité de coulissement longitudinal. Cette patte, solidaire de la barre de liaison, et maintenue dans la direction longitudinale par les plots 71 et 76, garantit ainsi le maintien de la perpendicularité entre la barre de liaison et les rainures, et évite donc tout risque d'arc-boutement. Des barres de renfort 64 peuvent être utilisées pour renforcer la rigidité de la patte 63 par rapport à la barre de liaison. Egalement, les plots 71 et 74 pourront en fait avoir une tête commune constituée d'une plaque 77 insérée dans la nervure 40 et portant les deux tiges filetées constituant chaque plot.

Pour réaliser le conduit de fumées, les éléments formés chacun d'une virole et des cadres associés sont placés dans la charpente, empilés les uns au dessus des autres. Compte tenu du guidage en coulissement des cadres entre les cornières de charpente 4, les viroles viennent se superposer en s'appuyant l'une sur l'autre, une virole quelconque supportant tout le poids des éléments de conduit situés au-dessus. Malgré la faible épaisseur des pièces en composite, leur résistance à la compression est suffisante pour supporter la charge qui en résulte, même pour des cheminées de grande hauteur, la résistance à la compression axiale des viroles étant grandement renforcée par la présence des raidisseurs de chaque pièce. Dans le cas de conduits très haut, il peut cependant être prévu, par exemple vers la mi hauteur de la cheminée, comme représenté figure 1, des moyens de soutien 8 liés au fût ou à la charpente, travaillant en traction ou en compression, pour reprendre au moins en partie la charge des éléments de conduit de la partie supérieure du conduit.

La liaison entre deux éléments superposés est prévue de manière à assurer d'une part une bonne étanchéité entre viroles, et d'autre part un positionnement précis et constant des bords adjacents de deux viroles superposées, et ceci tout en autorisant d'éventuels déformations de dilatation différentielle et en tolérant les imprécisions dimensionnelles inévitables lors de la fabrication de pièces de grandes dimensions.

La figure 6a montre un premier mode de liaison, utilisant pour assurer la jonction entre les viroles un profilé 80 en SVR, réalisé par exemple par pultrusion, comportant un corps 81 servant d'entretoise et deux ailes 82 dans lesquelles sont ménagées des rainures aptes à recevoir en emboîtement étanche les chants haut et bas respectivement des pièces constituant les deux viroles superposées. Pour éviter que tout le poids soit supporté par les chants des pièces en composites, des équerres 83 sont fixées par une de leurs ailes sur les bords des viroles, du côté extérieur du conduit, par des plots s'engageant dans les rainures 40 et serrés sur les ailes des nervures, de manière similaire à la fixation des barres de liaisons 61. Les autres ailes des équerres 83 viennent s'appuyer de part et d'autre du corps 81 du profilé de jonction 80, sur lequel elles peuvent être par exemple boulonnées. Préférentiellement le profilé 80 s'étend d'un seul tenant sur toute la périphérie du conduit et, pour faciliter son cintrage dans les zones d'angle, des fentes 84 sont réalisées dans son corps, comme on le voit figure 7.

La variante de la figure 6b consiste à remplacer le profilé 80 par un joint 85 en matériau élastomère résistant à la température et aux attaques chimiques des condensats, placé uniquement entre les chants de deux viroles superposées. Un système d'équerre, comme dans la variante précédente, est utilisé comme moyen d'appui d'une virole sur l'autre, les équerres étant dans ce cas directement en appui l'une sur l'autre, une cale 86 pouvant éventuellement être placée en complément entre les extrémités des nervures des deux viroles.

Les figures 6c et 6d illustrent des variantes intermédiaires dans leur principe entre les deux variantes précédentes. Le supportage et la liaison entre viroles est réalisée par contact direct des cornières comme dans le cas de la figure 6b, mais l'étanchéité est assurée par des profilés rainurés, réalisés soit sous formes de deux gouttières 87 emboîtées respectivement sur les chants des viroles et en contact face contre face comme représenté figure 6c ; soit sous forme d'un seul profilé 88 pourvu de deux rainures, représenté figure 6d.

L'invention n'est pas limitée aux modes de réalisation qui viennent d'être décrits uniquement à titre d'exemple, ni à la seule application aux conduits de fumées de cheminées. Une conception similaire pourra également être utilisée pour des éléments de conduits disposés non nécessairement à la verticale, tels que conduits divers , carneaux, etc., ou pour toute pièce ou ensemble tels que piquages d'entrée, pièces de tête, piquages de mesure, pièce de fond, etc.

## Revendications

1. Système de conduit de transport d'effluents gazeux, caractérisé en ce qu'il comporte une structure porteuse (4) destinée à supporter le conduit (2) et s'étendant selon une direction longitudinale, et en ce que le conduit est formé par la juxtaposition, selon la dite direction longitudinale, d'éléments de conduits, chaque élément de conduit étant lui même formé par un assemblage de pièces constitutives (10, 11, 20, 21) de faible épaisseur en matériau composite, liées entre elles de manière étanche par leurs chants longitudinaux (50), les pièces constitutives d'un élément de conduit ayant toutes la même dimension dans la dite direction longitudinale et comportant par ailleurs, sur leurs faces extérieures, des nervures de raidissement (30, 31) dans lesquelles sont ménagées des rainures (40) qui s'étendent dans la direction longitudinale et dans lesquelles sont placés des plots de maintien (70, 71) fixés sur des barres de liaison (61) s'étendant sensiblement perpendiculairement à la direction longitudinale, les plots de maintien d'une même barre de liaison s'engageant respectivement dans des rainures différentes d'un même élément de conduit.

2. Système selon la revendication 1, caractérisé en ce que un seul (71) des plots de maintien d'une même barre est lié rigidement à la pièce dans la rainure de laquelle il est placé et constitue un point fixe, les autres plots (70) s'engageant dans leurs rainures respectives avec une possibilité de coulissement longitudinal et de jeu transversal.

3. Système selon la revendication 2, caractérisé en ce que les barres de liaison (61) forment les côtés de cadres métalliques (60) entourant le conduit.

4. Système selon la revendication 2, caractérisé en ce que les barres de liaison (61) des cadres portent une patte (63) qui s'étend dans la direction longitudinale et qui porte un plot de maintien supplémentaire (76) introduit dans la même rainure que le plot de point fixe (71).

5. Système selon la revendication 3, caractérisé en ce que les cadres (60) sont montés guidés et librement coulissants dans la structure porteuse (4) .

6. Système selon la revendication 1, caractérisé en ce qu'il comporte des moyens (80, 85, 87, 88) de liaison étanche des éléments de conduits adjacents entre eux.

7. Système selon la revendication 6, caractérisé en ce que les moyens de liaison étanche comportent des profilés de jonction (80, 87, 88) qui s'emboîtent, de manière étanche, avec les bords des pièces constitutives.

8. Système selon la revendication 6, caractérisé en ce que les moyens de liaison étanche comportent un joint (85) en matériau élastomère.

9. Pièce constitutive d'un conduit de transport d'effluents gazeux, caractérisée en ce qu'elle est réalisée en matériau composite et a une forme de plaque rectangulaire allongée selon une direction longitudinale, plane ou arrondie, et comportant sur une face extérieure au moins un renfort raidisseur (30, 31) s'étendant dans la dite direction longitudinale et dans lequel est réalisé une rainure (40) de forme générale en T, les bords longitudinaux (50) de la pièce étant conformés pour pouvoir coopérer, entre deux telles pièces juxtaposées, en assurant une liaison étanche entre les dites pièces.

10. Pièce selon la revendication 9, caractérisée en ce qu'elle est réalisée en résine synthétique composite, par pultrusion.
